# EUROPEAN PATENT SPECIFICATION

(11) **EP 3 519 485 B1**
(45) Date of publication and mention of the grant of the patent: **16.12.2020**
(21) Application number: 17772057.0
(22) Date of filing: 25.09.2017
(51) Int. Cl.: C08J 9/00, C08J 9/10, C08K 5/23, C08L 23/08, C08J 9/02

(54) **THERMOPLASTIC FOAM WITH CONCOMITANT EXPANSION AND CURING**
THERMOPLASTISCHER SCHAUM MIT GLEICHZEITIGER EXPANSION UND HÄRTUNG
MOUSSE THERMOPLASTIQUE AVEC EXPANSION ET DURCISSEMENT CONCOMITANTS

(30) Priority: 30.09.2016 EP 16191765
(43) Date of publication of application: 07.08.2019
(73) Proprietor: Sika Technology AG, 6340 Baar (CH)
(72) Inventor: PARIPOVIC, Dusko, 8049 Zürich (CH)
(74) Representative: Sika Patent Attorneys
(86) International application number: PCT/EP2017/074211
(87) International publication number: WO 2018/060132

(56) References cited:
- WO-A1-2016/005536
- US-A- 4 129 531
- US-A- 4 460 748

## Description

### Technical Field

The present invention relates to a baffle and/or reinforcement element for hollow structures comprising a thermally expandable thermoplastic composition, resulting in a stable foam material, a process for manufacturing such a baffle and/or reinforcement element, its use to seal, baffle, or reinforce a hollow structure, and a method for sealing, baffling, or reinforcing a hollow structure.

### Background of the Invention

Manufactured products often contain orifices and cavities or other hollow parts that result from the manufacturing process and/or that are designed into the product for various purposes, such as weight reduction. Automotive vehicles, for example, include several such orifices and cavities throughout the vehicle, including in the vehicle's structural pillars and in the sheet metal of the vehicle doors. It is often desirable to seal such orifices and cavities so as to minimise noise, vibrations, fumes, dirt, water, humidity, and the like from passing from one area to another within the vehicle by means of sealing members or baffle elements built into the orifice or cavity. Likewise, such members or elements often fulfil an additional task of reinforcing the hollow structure of the manufactured product, e.g. automotive part, so much that it becomes more resistant to mechanical stress but still maintains the low weight advantage of the hollow structure.

Such elements used for sealing, baffling or reinforcing often consist of a carrier, made of plastic, metal, or another rigid material, and one or more layers of a thermoplastic material attached to it which is able to expand its volume when heat or another physical or chemical form of energy is applied, but they can also be entirely made of expandable material. Using an adequate design, it is possible to insert the baffle or reinforcement element into the hollow part of the structure during the manufacturing process but also to leave the inner walls of the structure still accessible (or the cavities passable) by e.g. a liquid. For example, during the manufacture process of a vehicle, the hollow parts of a metal frame can still be largely covered by an electro-coating ("e-coat") liquid while the baffle or reinforcement elements are already inserted, and afterwards during a heat treatment step, the expandable thermoplastic material of the baffle or reinforcement element expands to fill the cavities as intended.

The development of such baffles or reinforcement elements has led to highly advanced systems, where the expandable material is able to increase its volume by up to several hundred percent, forming a stable, cross-linked foam-like structure that fills the cavities and adhering to the walls of the structure intended to be sealed, baffled, or reinforced. Especially in automotive manufacturing, this has led to considerable weight reduction and excellent dampening of noise or vibrations in the car body.

Currently employed thermally expandable compositions often consist of polymers such as ethylene-vinyl acetate polymers that can be cross-linked by radical initiators, most commonly peroxides. In order to obtain foams, these compositions furthermore contain blowing agents, the most widely used being azodicarbonamide (also called azodicarboxamide or azobisformamide) and 4,4'-oxydibenzenesulfonyl hydrazide (abbreviated OBSH). Under activation conditions, such as elevated temperature, curing of the cross-linkable network takes place, while simultaneously the blowing agent decomposes and releases gases. This leads to the above mentioned volume expansion and the formation of a stable foam which in ideal cases fills the cavity as intended and adheres to its walls. Such a system is for example disclosed in DE 10 2011 080 223 A1.

Normally, if expanded by thermal activation, these compositions form stable foams at temperatures around 180 °C, which corresponds to heat-treatment conditions generally applied in automotive manufacturing, for example during an e-coat bake process. Recent developments in automotive manufacturing, however, have triggered the demand for materials that are able to form stable foams at significantly lower temperatures, i.e. 150 °C, or less. Standard expandable thermoplastic compositions of the state of the art are often not able to meet this requirement.

Another problem in connection with the established solutions described above is the fact that the most commonly used blowing agents, in particular azodicarbonamide, are increasingly facing regulatory problems regarding health and safety issues.

WO 2016/005536 A1 discloses thermally expandable compositions comprising polymers cross-linkable by peroxide, an acrylate, a peroxide, and a blowing agent. Among the preferred blowing agents are azodicarbonamide and OBSH.

US 4 129 531 A discloses a method for cross-linking and optionally foaming a polymer composition using azo esters with a high decomposition temperature over 170 °C. Cross-linking and optionally foaming can only be achieved above this temperature.

US 4 460 748 A teaches a method for cross-linking and foaming a polymer or mixture using azo esters and/or azo ethers. In order to enable the cross-linking reaction, a temperature of at least 150 °C is required.

It is thus desirable to obtain an expandable thermoplastic composition that overcomes these problems of the current state of the art.

### Summary of the Invention

It is an object of the present invention to provide a baffle and/or reinforcement element for hollow structures, wherein said element comprises or essentially consists of a thermally expandable composition that is able to expand uniformly over a wide temperature range, e.g. between 120 °C and 200 °C, and particularly at ultra-low temperatures, i.e. between 120 °C and 150 °C, and which creates stable expanded foam with excellent adhesion properties while not using azodicarbonamide or OBSH foaming agents.

Surprisingly, the present invention provides a solution to that problem by providing baffle and/or reinforcement element for hollow structures, wherein said element comprises or essentially consists of a composition comprising a polymer that is cross-linkable by radical reaction, an azo radical initiator selected from the group consisting of azobisisobutyronitrile, 1,1'-azobis(cyclohexane-1-carbonitrile), and 2,2'-azobis[2-methyl-N-(2-hydroxyethyl)propionamide] in a sufficient amount, preferably an adhesion promoter, preferably a tackifier, preferably an antioxidant, and preferably a polyacrylate of low molecular weight, and wherein said composition is free of peroxides, bicarbonates, azodicarbonamide, or 4,4'-oxybis(benzenesulfonyl hydrazide).

Thus, the present invention achieves this object with the features of independent claim 1 by providing a baffle and/or reinforcement element for hollow structures, wherein said element comprises or essentially consists of a thermally expandable composition, comprising
a) between 20 and 85 wt.-% of least one thermoplastic polymer **P,** cross-linkable by radical reaction;
b) between 2 and 15 wt.-% of at least one azo radical initiator **I;**
c) between 0 and 25 wt.-% of at least one adhesion promoter **AD;**
d) between 0 and 10 wt.-% of at least one tackifier **T;**
e) between 0 and 2.5 wt.-% of at least one antioxidant **AO;**
f) between 0 and 2.5 wt.-% of at least one polyacrylate **AC,** having a molecular weight of less than 2'500 g/mol;
wherein all individual amounts are based on the total composition before expansion, and wherein said composition is free of peroxides, bicarbonates, azodicarbonamide, or 4,4'-oxybis(benzenesulfonyl hydrazide), and wherein said azo radical initiator **I** is selected from the group consisting of azobisisobutyronitrile, 1,1'-azobis(cyclohexane-1-carbonitrile), and 2,2'-azobis[2-methyl-N-(2-hydroxyethyl)propionamide].

Further aspects of the present invention are subject of other independent claims. Preferred embodiments of the invention are subject of dependent claims.

### Detailed Description of the Invention

The unit term "wt.-%" means percentage by weight, based on the weight of the respective total composition before expansion, if not otherwise specified. The terms "weight" and "mass" are used interchangeably throughout this document.

The term "functionality" in connection with a molecule describes in this document the number of chemical functional groups per molecule. The term "polyfunctional" or "poly-" followed by a functional group describes a molecule with more than 1 functional groups of a given type. For example, a polyfunctional acrylate (a polyacrylate) with a functionality of 3 describes a molecule with 3 acrylate groups. The term "average functionality" is used if a mixture of molecules is present that differ slightly in individual functionality, but in average exhibit a given functionality, as it is sometimes the case with technical grade chemicals.

The term "radical" used in this document in connection with polymers cross-linkable by radical reaction describes, as known to a person with ordinary skill in the art of chemistry, a chemical species with an unpaired valence electron. The cross-linking reactions involved in the curing or hardening of the polymer system of the present invention follow a radical mechanism.

Melt flow index (MFI) is determined by the ASTM D1238 standard method, using a capillary rheometer at 190 °C and a weight of 2.16 kg. MFI values describe the amount of polymer coming out of the capillary under pressure of the defined weight and at the defined temperature during a given time.

Volume changes on the thermally expandable material are determined using the DIN EN ISO 1183 method of density measurement (Archimedes principle) in deionised water in combination with sample mass determined by a precision balance.

All industrial norms mentioned in this document are referring to the respective current versions at the time of filing, if not specified otherwise.

The present invention comprises as a first necessary component at least one polymer **P** that is cross-linkable by radical reaction. Principally all thermoplastic polymers or thermoplastic elastomers capable of cross-linking reactions using radical initiators are suitable. The artisan skilled in the field describes polymers as "cross-linkable by radical reaction" if these polymers contain functional groups, e.g. C-C double bonds, which release hydrogen atoms under influence of a radical initiator, e.g. a peroxide or azo initiator, from their backbone or side chain, such that a radical remains that is able to radically attack other polymer chains in a subsequent step, leading to a radical chain reaction cross-linking process and ultimately to a polymer network.

Suitable polymers **P** include, for example, styrene-butadiene copolymers, styreneisoprene copolymers, ethylene-vinyl acetate copolymers (EVA), ethylene-methacrylate copolymers, ethylene-ethyl acrylate copolymers, ethylene-butyl acrylate copolymers (EBA), ethylene-(meth)acrylic acid copolymers, ethylene-2-ethylhexyl acrylate copolymers, ethylene-acrylic ester copolymers, polyolefinc block copolymers, and polyolefins such as polyethylene or polypropylene. These polymers are especially suitable for acoustical foams and/or baffles, for example in automotive manufacturing. Preferred such polymers **P** include EVA and EBA, in particular EBA.

For reinforcing elements, e.g. in automotive manufacturing, tougher polymers, such as bisphenol A or bisphenol F-type epoxy resins may be advantageous as polymers **P.**

The copolymers mentioned above describe polymers made from more than one type of monomer, and they can be block type copolymers or random copolymers. Polymers **P** can also be further functionalised, meaning they can contain further functional groups such as hydroxyl, carboxy, anhydride, acrylate, and/or glycidylmethacrylate groups. It is however preferred for many embodiments to use polymers **P** without such further functionalization, but in combination with reactive functionalized adhesion promoters **AD.** This approach offers a better controllability of the curing mechanism and the adhesion properties. Suitable adhesion promoters **AD** with such functionalization are discussed further below.

Preferred for the present invention is one or more polymer **P** with an average melt flow index (MFI) of between 1 and 200 g/10 min, preferably between 10 and 100 g/10 min, more preferably between 25 and 75 g/10 min, most preferably between 35 and 55 g/10 min.

In one embodiment, polymer **P** comprises or essentially consists of ethylene-vinyl acetate (EVA). In this case, the content of vinyl acetate monomers in EVA should be between 8 and 45 wt.-%, preferably between 15 and 30 wt.-%, based on the total weight of the EVA polymer.

In a preferred embodiment, polymer **P** comprises EVA with 32 wt.-% vinyl acetate monomer and a MFI of 43 g/10 min.

In another, highly preferred embodiment, polymer **P** comprises ethylene-butyl acrylate (EBA) copolymer with 35 wt.-% butyl acrylate monomer and a MFI of 40 g/10 min.

In cases where more than one type of polymer **P** is used, the individual MFI combine to an average MFI of the used polymer mixture, which has to be determined according to ASTM D1238.

The thermally expandable composition according to the present invention preferably contains said at least one polymer **P** with an amount of between 20 and 85 wt.-%, preferably between 50 and 80 wt.-%, more preferably between 60 and 75 wt.-%, based on the weight of the total composition.

In one embodiment, more than one type of polymer is used as polymer **P.** It may be beneficial for the properties of the inventive composition to use at least two types of polymer (herein named **P1** and **P2)** with different melt flow indices (MFI), one much higher than the other. For example, one embodiment uses a first polymer **P1** with an MFI of between 100 and 200 g/10 min and a second polymer **P2** with an MFI of between 0.1 and 60 g/10 min, preferably between 0.1 and 10 g/10 min, preferably with a weight ratio of the two polymers **P1** : **P2** in the composition of 0.7 to 2.0, preferably 1 to 1.7.

A preferred embodiment using two EVA copolymers comprises as polymer **P1** an EVA with 18 wt.-% vinyl acetate monomer and a melt flow index (MFI) of 150 g/10 min and as polymer **P2** an EVA with 28 wt.-% vinyl acetate monomer and a MFI of 6 g/10 min. Most preferred weight ratio of the two polymers **P1** : **P2** is between 1.3 and 1.7.

When using two polymers, comprising **P1** with an MFI of between 100 and 200 g/10 min and a second polymer **P2** with an MFI of between 0.1 and 60 g/10 min, a preferred amount for **P1** is between 1 and 35 wt.-%, preferably between 10 and 35 wt.-% and for **P2** between 10 and 50 wt.-%, preferably between 15 and 30 wt.-%.

Another preferred embodiment uses two ethylene-butyl acrylate (EBA) copolymers, comprising as **P1** an EBA with 34 wt.-% butyl acrylate monomer and a MFI of 40 g/10 min and as **P2** an EBA with 30 wt.-% butyl acrylate monomer and a MFI of 2 g/10 min.

A second necessary component of the thermally expandable composition according to the present invention is at least one azo radical initiator **I** selected from the group consisting of azobisisobutyronitrile, 1,1'-azobis(cyclohexane-1-carbonitrile), and 2,2'-azobis[2-methyl-N-(2-hydroxyethyl)propionamide], with an amount of between 2 and 15 wt.-%, preferably between 3 and 13 wt.-%, more preferably between 4 and 10 wt.-%, based on the total weight of the composition.

The azo radical initiator **I** serves not only as a radical initiator for the cross-linking reaction, but also as a blowing agent for the foaming process. This is possible by using an amount high enough that the released nitrogen gas formed by the decomposition of the azo compound is able to foam the thermoplastic material sufficiently.

It is advantageous for the inventive composition to use an azo radical initiator that is essentially inert at room temperature (23 °C) and exhibits an activation temperature suitable for the intended purpose. For example, if the composition is used for a baffle and/or reinforcement element in automotive manufacturing, an activation temperature of between 90 and 250 °C is preferred. Apart from that, other, at room temperature solid components (such as in some cases polymer **P)** have to be compatible with these components as well, for example in terms of softening or melting point or general miscibility. It may be advantageous to use compatibilizers in certain applications to increase the miscibility of those components.

It is furthermore advantageous for the inventive composition to use at least one azo radical initiator **I** that exhibits a half-life of 10 h at a temperature of between 55 °C and 120 °C, as measured in toluene or a similar apolar solvent. For certain azo radical initiators **I,** other solvents may be more suitable, such as substituted (e.g., chlorinated) benzene, methanol, or water. There, the 10 h half-life may differ from the measurements made in toluene, but the values should preferably still be in the range of approximately 55 °C and 120 °C for the 10 h half-life. The choice of the solvent is mainly dependent on the solubility of the azo compound in the respective solvent. For the present invention, there is no principal restriction in terms of solubility and/or polarity of an azo radical initiator compound. It is advantageous, however, if the azo radical initiator shows high compatibility and/or miscibility with the thermoplastic matrix of the composition. This depends on the type of polymer **P** and other components used and may be further optimized by using processing aides and other compatibilizing additives. Suitable azo radical initiators **I** include azobisisobutyronitrile (AIBN), 1,1'-azobis(cyclohexane-1-carbonitrile), and 2,2'-azobis[2-methyl-N-(2-hydroxyethyl)propionamide].

The inventive thermally expandable composition is free of peroxides. Furthermore, the inventive thermally expandable composition is preferably free of other commonly used blowing agents, apart from the azo radical initiators **I,** such as hydrazides, nitroso compounds, carbamates, carbazides, and bicarbonates, in particular azodicarbonamide and 4,4'-oxybis(benzenesulfonyl hydrazide). In this document, "free of" means that the amount is lower than 0.05 wt.-%, based on the total composition, preferably lower than 0.01 wt.-%, more preferably so low that it is not detectable by standard analytic methods.
The thermally expandable composition according to the present invention thus is free of peroxides, bicarbonates, azodicarbonamide, or 4,4'-oxybis(benzenesulfonyl hydrazide).

The inventive composition furthermore preferably comprises at least one antioxidant **AO.** Antioxidants are commonly used in polymer-based compositions and known to the person skilled in the art of polymer-based composition formulation. For the present invention, their use offers the advantage of a more controlled foaming process including uniform expansion of the composition and crosslinking of polymer **P** over a wide temperature range. While it is possible to obtain a low temperature curing system without the use of antioxidants, e.g. below 150 °C, the same composition is often less able to produce a stable foam at high temperatures, e.g. above 200 °C. In order to obtain a composition able to produce stable foam of high quality over a broad temperature range, an antioxidant is thus recommended. Only the embodiments optimized for ultra-low temperatures, i.e. between 120 °C and 150 °C, are recommended to be formulated without antioxidant.

Examples of suitable antioxidants **AO** include sterically hindered aromatic amines and/or sterically hindered phenols and/or organophosphonites, such as bis(3,3-bis(4'-hydroxy-3-*tert*-butylphenyl)butanoic acid) glycol ester or tetrakis(methylene(3,5-di-*tert*-butyl-4-hydroxy-hydrocinnamate))methane or tetrakis(2,4-di-*tert-*butylphenyl)-4,4-biphenyldiphosphonite.
Most preferred antioxidants **AO** include sterically hindered phenols, in particular pentaerythritol tetrakis(3-(3,5-di-*tert-*butyl-4-hydroxyphenyl)propionate).

Antioxidants **AO** are preferably included with an amount of between 0.05 and 2.5 wt.-%, preferably between 0.25 and 2 wt.-%, more preferably between 0.5 and 1.5 wt.-%, based on the total weight of the composition.

It is preferred that the antioxidant **AO** has a melting point of above 80 °C, in particular above 100 °C, preferably above 110 °C, most preferred above 120 °C. It is also preferred that the antioxidant **AO** has a melting point of below 200°C, in particular below 180 °C, preferably below 150 °C, most preferred below 130 °C.

Preferred embodiments of the inventive thermally expandable composition comprise as antioxidant **AO** a sterically hindered phenol compound with a melting point of at least 110 °C.

It may be advantageous to use a synergist together with the antioxidant **AO.** Synergists improve the performance of the antioxidant, especially at high temperatures, and may lead to an even better expansion of the inventive composition. Examples of suitable synergists include sterically hindered thioethers, such as didodecyl 3,3'-thiodipropionate, distearyl 3,3'-thiodipropionate and/or zinc-2-mercaptotoluimidazole. Most preferred is didodecyl 3,3'-thiodipropionate.

If used at all, the synergist is preferably used with an amount of between 0.05 and 1.5 wt.-%, preferably between 0.075 and 1 wt.-%, more preferably between 0.1 and 0.5 wt.-%, based on the total weight of the composition.

The heat required for the thermally activated decomposition reaction that causes the foaming (expansion) can be applied externally or internally, the latter e.g. from an exothermic reaction. Preferably, the blowing agent is activated (i.e. starts to decompose under gas release) at a temperature of less than 160 °C, especially between 80 °C to 150 °C, more preferably between 90 °C and 140 °C.

If the present inventive thermally expandable composition finds a use in a baffle and/or reinforcement element, e.g. in automotive manufacturing, it is preferable that the activation temperature of the azo radical initiator **I** that is used in the inventive composition also as blowing agent is adjusted to the manufacturing conditions of the automotive part to be baffled or reinforced. As an example, the baffle and/or reinforcement element can be inserted into a cavity of a structure that needs to be treated by an electrocoating liquid, in its unexpanded state still leaving the surface of the structure accessible, and subsequently, during the heat treatment of the automotive part (i.e. the curing procedure for the electrocoating liquid), the baffle and/or reinforcement element simultaneously (or shortly thereafter) expands to its intended final shape and at least partially closes or fills the cavity. In such a case, the peak or main decomposition or expansion temperature should correspond to the temperature conditions of said heat treatment, e.g. to between 120 °C and 200 °C.

In preferred embodiments, the inventive composition also includes at least one adhesion promoter **AD.** Preferably these substances are incorporated into the polymer network during the cross-linking reactions via functional groups similar to those present in polymer **P,** such as acrylate groups. The functional groups advantageous for adhesion include, for example, hydroxyl, amine, thiol, carboxyl, anhydride, acrylate, and/or glycidylmethacrylate groups. Suitable adhesion promoters include, for example, ethylene-glycidyl methacrylate copolymers, in particular ethylene-acrylic acid-glycidyl methacrylate terpolymers.

Most preferred adhesion promoters **AD** include thermoplastic, glyicdyl methacrylate copolymers with an average melt flow index (MFI) of between 0.5 and 100 g/10 min, preferably between 1 and 50 g/10 min, more preferably between 2 and 25 g/10 min, most preferably between 3 and 10 g/10 min and a glycidyl methacrylate content of between 1 and 50 wt.-%, preferably between 2 and 25 wt.-%, more preferably between 5 and 15 wt-%, based on the weight of the copolymer.

Adhesion promoters **AD** are preferably used in compositions according to the present invention with an amount of between 0 and 25 wt.-%, preferably between 5 and 22 wt.-%, more preferably between 10 and 20 wt.-%, based on the total weight of the composition.

The inventive composition may furthermore advantageously comprise small, polyfunctional acrylates **AC,** having a molecular weight of less than 2'500 g/mol, more preferably less than 1'000 g/mol, and preferably exhibit an acrylate functionality of at least 2 or 3, preferably at least 4 or 5, or more. These acrylates can improve the radical chemistry crosslinking of polymer **P** and help obtaining a stable foam structure. If present, they are preferably included with an amount of between 0.1 and 2.5 wt.-%, preferably between 0.2 and 2 wt.-%, more preferably between 0.25 and 1.5 wt.-%, most preferably between 0.5 and 1 wt.-%, based on the total weight of the composition.

Suitable acrylates **AC** with a functionality of 2 include ethylene glycol dimethacrylate, diethylene glycol dimethacrylate, triethylene glycol dimethacrylate, triethylene glycol diacrylate, tripropylene glycol dimethacrylate, 1,3-butanediol dimethacrylate, 1,4-butanediol dimethacrylate, 1,10-dodecanediol dimethacrylate, 1,6-hexandieol dimethacrylate, neopentylglycol dimethacrylate, and polybutylene glycol dimethacrylate, and hexanediol diacrylate. Most preferred acrylate **AC** with functionality of 2 is hexanediol diacrylate. Suitable acrylates **AC** with a functionality of 3 or higher include glycerol triacrylate, pentaerythritol triacrylate, pentaerythritol trimethacrylate, trimethylolpropane triacrylate, trimethylolpropane trimethacrylate, tetramethylolmethane tetraacrylate, Di-(trimethylolpropane) tetraacrylate, pentraerythritol tetraacrylate, dipentaerythritol pentaacrylate, dipentaerythritol hexaacrylate, tri(2-methacryloxyethyl) trimellitate, tri(2-acryloxyethyl) isocyanurate, as well as their ethoxylated or propoxylated derivates. Most preferred acrylate **AC** with functionality of 5 is dipentaerythritol pentaacrylate. Furthermore suitable are highly functional, hyperbranched acrylates with functionalities of between 6 and 16, or higher. Examples of such acrylates include hyperbranched polyester-polyacrylates.

The inventive composition may advantageously comprise at least one tackifier **T** in order to facilitate obtaining a homogeneously mixed and compounded composition. Preferably used such tackifiers **T** include hydrocarbon resins, for example aromatically modified C5 hydrocarbon resins, or polyolefin waxes, for example homopolymer polyolefin waxes with melting points between 100 °C and 120 °C. Such compounds are preferably included in the inventive compositions with an amount of between 0 and 10 wt.-%, preferably between 3 and 9 wt.-%, more preferably between 5 and 8 wt.-%, based on the total weight of the composition.

The inventive thermally expandable composition comprises in preferred embodiments as said tackifier **T** a C5 hydrocarbon resin which is optionally aromatically modified.

Fillers are, if at all, preferably incorporated in the inventive compositions with an amount of between 1 and 15 wt.-%, based on the total weight of the composition.

Suitable as fillers are, e.g., ground or precipitated calcium carbonate, calcium-magnesium carbonate, talc, gypsum, graphite, barite, silica, silicates, mica, wollastonite, carbon black, or the mixtures thereof, or the like.

Apart from the essential and optional ingredients listed above, the present inventive thermally expandable composition may contain other components commonly used in such compositions and known to the ordinarily skilled artisan in the field. These include, for example, colorants, dispersion aides, processing aides, or homogenizers, other adhesion promoters, stabilizers, and the like, which all are known components to the person of average skill in the field of thermoplastic compositions.

Colorants or dyes, such as pigments, e.g. on the basis of carbon black, may be included in the present inventive compositions. Their amount is preferably between 0 and 1 wt.-%, based on the total weight of the composition.

A preferred embodiment of the inventive baffle and/or reinforcement element comprises a thermally expandable composition comprising:
between 60 and 75 wt.-% of said thermoplastic polymer **P;**
between 2.5 and 10 wt.-% said azo radical initiator **I;**
between 10 and 20 wt.-% of said adhesion promoter **AD;**
between 5 and 8 wt.-% of said tackifier **T;**
between 0.5 and 1.5 wt.-% of said antioxidant **AO;**
between 0.5 and 1.5 wt.-% of said polyacrylate **AC;** selected such that the sum of all individual wt.-% values does not exceed 100 wt.-%.

The compositions according to the present inventions can be manufactured by mixing the components in any suitable mixing apparatus, e.g. in a dispersion mixer, planetary mixer, double screw mixer, continuous mixer, extruder, or dual screw extruder.

It may be advantageous to heat the components before or during mixing, either by applying external heat sources or by friction generated by the mixing process itself, in order to facilitate processing of the components into a homogeneous mixture by decreasing viscosities and/or melting of individual components. However, care has to be taken, e.g. by temperature monitoring and use of cooling devices where appropriate, not to significantly exceed the activation temperatures of the azo radical initiator **I.** The final composition is preferably essentially solid at room temperature (23 °C), meaning that it does not visibly deform at this temperature just by means of gravity during at least 24 h.

After mixing, the resulting composition may be shaped into its desired form by, e.g., extruding, blow-moulding, pelleting, injection moulding, compression moulding, punching or stamping or any other suitable process.

The thermally expandable compositions may be produced in a substantially one-step process, involving the addition of all components in a series and/or simultaneously. However, it may also be advantageous to formulate the composition as a two-part system, or even multipart system, and mix these parts into the final composition at a later stage. Such an approach may, for example, increase shelf life of the composition in places with demanding conditions (such as extraordinarily high temperatures), optimise storage room demand and transport weight, and allow for tailor-made, modular compositions regarding different applications.

As described before, in preferred embodiments of the present invention the expansion of the thermally expandable composition according to the present invention is triggered by heat. This means, the azo radical initiator **I** is activated by a thermal process that exceeds its activation temperature and exhibits a duration long enough for both concomitant processes (azo-initiated radical polymerisation and decomposition of the azo compound under nitrogen gas formation) to proceed until the expandable material has expanded and cured into its intended final (sufficiently expanded and stable) state. The optimal temperature and duration (dwell time) depends on the azo radical initiator **I** or the mixture of different azo radical initiators **I** used in the inventive composition. These values are provided by the manufacturers of such components and/or are known to the ordinarily skilled artisan. Commonly, such activation temperatures are in the range of 75 °C to 250 °C, preferably 100 °C to 200 °C, and require a dwell time of between 5 and 90 min, preferably between 10 and 60 min.

Thus, another aspect of the present invention is a process for foaming a thermally expandable composition according to the specifications above, wherein said thermally expandable composition is subjected to a temperature of between 120 and 200 °C for between 5 and 90 min, preferably between 10 and 60 min.

In other preferred embodiments however, the expansion of the thermally expandable composition according to the present invention is triggered by UV irradiation. This means, the azo radical initiator **I** is activated by UV light having an energy sufficiently high to trigger the chemical decomposition of the azo radical initiator **I** and thus to start and maintain the azo-initiated radical polymerisation and nitrogen gas formation. For optimal curing and expansion behaviour using UV irradiation, it is preferred that the thermally expandable composition has a layer thickness of no more than 10 mm, more preferred no more than 5 mm, even more preferably no more than 4 mm, most preferably no more than 2 mm. This ensures a sufficient penetration of the material by UV radiation. For this process, any UV source can be used that has a sufficient power for the decomposition to take place. It is preferred to use an UV lamp with at least 25 W power, preferably at least 50 W power, more preferably at least 100 W power. It is possible to use UV LED (light-emitting diodes), which is preferred in some applications as they can be designed to not emit any infrared (IR) radiation (and thus do not create excessive heat).
For UV-activated activation, it is preferred to use UV sources with a UV intensity on the sample surface of at least 2.5 mW/cm⁻², preferably at least 5 mW/ cm⁻², more preferably at least 10 mW/cm⁻².
For the UV-triggered expansion of the thermally expandable composition according to the present invention, it is preferred to use a matrix of polymer **P** that has a softening or melting point in the range of the temperature which is created by the UV irradiation and/or is established otherwise, e.g. by heating. This has the advantage that a higher volumetric expansion can be achieved. If the matrix of the polymer **P** is too hard under UV activation conditions, the foaming may be inhibited or even prevented.

Thus, another aspect of the present invention is a process for foaming a thermally expandable composition according to the specifications above, wherein said thermally expandable composition is subjected to UV radiation with a UV intensity on the composition surface of between 2.5 mW/cm⁻² and 10'000 mW/ cm⁻² for between 1 and 60 min, preferably between 2 and 15 min, more preferably between 5 and 10 min. Depending on the application and the production cycle, or other requirements, the irradiation time may also be longer than 60 min, of course, for example up to several hours. This depends of course also on the UV intensity and/or lamp power used.

One advantage of expansion triggered by heat is that any shape or size of a thermally expandable composition according to the invention can be used, as long as the heat treatment can be uniformly applied to the whole composition. Another advantage of expansion triggered by heat is that exceptionally high expansion volume and expansion stability can be achieved.

One advantage of expansion triggered by UV radiation is that much lower activation times can be achieved, compared to thermal activation. Preferred activation times (duration of UV irradiation) are 15 min or less, preferably 10 min or less, more preferably 5 min or less. This may lead to much shorter production cycles and much lower production costs, depending on the application where a thermally expandable composition according to the present invention is used, such as industrial or automotive manufacturing.
Another advantage of expansion triggered by UV radiation is that it can be used for applications where thermally sensitive materials are present. In such cases, it is preferred to use an UV lamp with minimal or no IR radiation.

It is of course possible to use a combined approach of both UV and thermal activation. The heat required may be coming from the UV source, or it may be applied externally. In such cases, the temperature for an efficient expansion of a sample with thickness higher than 5 mm may be achieved with lower temperatures than with only thermal activation, and/or the activation time may be lower than with only thermal activation. Preferred temperatures for such a process are between 80 and 120 °C, with preferred activation times between 5 and 30 min. One advantage of such a combined approach is the possibility to use a moderate to high layer thickness for the expandable composition, while at the same time a shorter activation time and/or a lower activation temperature compared to the purely thermal activation is possible, which leads to considerable process cost reduction.

Another aspect of the present invention is the use of such thermally expandable compositions for the manufacturing of baffle and/or reinforcement elements. Such elements are used to seal, baffle, and/or reinforce hollow structures, e.g. a cavity in a hollow structural part of an automobile. Hollow parts in cars may include body components (e.g., panels), frame components (e.g., hydroformed tubes), pillar structures (e.g., A, B, C, or D-pillars), bumpers, roofs, or the like.

With regard to activation of the thermally expandable composition according to the present invention when used in automotive manufacturing using thermal activation, it is advantageous to couple the thermal activation of the composition with another process step involving heat treatment. An example for such a process step is the temperature curing step of an electrocoating (cathodic dip painting/coating) of the chassis or car body.

In one preferred embodiment, such a baffle and/or reinforcement element for hollow structures consists essentially of a thermally expandable composition. In this case, it is advantageous to design the shape of the element in a way that it can be easily fitted into and attached to the walls of the hollow structure to be baffled and/or reinforced. Manufacturing is in this case preferably done by injection moulding, punching or stamping, or extrusion through a shape template.

In another preferred embodiment, such a baffle and/or reinforcement element for hollow structures comprises, apart from the thermally expandable composition, a carrier element on which the inventive thermally expandable composition is deposited or attached. Such a design may be more cost-efficient and it may facilitate fixation of the baffle and/or reinforcement element on the walls of the structure to be baffled and/or reinforced, e.g. by incorporation of pins, bolts, or hooks on the carrier element. Furthermore, with a suitable design of the carrier element, the mechanical performance and stability of the baffle and/or reinforcement element according to the present invention can be increased.

Said carrier element may consist of any material that can be processed into a shape useable for an embodiment of the present invention. Preferred materials are polymeric materials, such as a plastic, elastomers, thermoplastics, thermosettable polymers, a blend or other combination thereof, or the like. Preferred thermoplastic materials include, without limitation, polymers such as polyurethanes, polyamides, polyesters, polyolefins, polysulfones, poly(ethylene terephthalates), polyvinylchlorides, chlorinated polyolefins, or the like. Especially preferred are high-temperature stable polymers such as poly(phenyl ethers), polysulfones, polyethersulfones, polyamides, preferably polyamide 6, polyamide 6,6, polyamide 11, polyamide 12, or a mixture thereof. Other suitable materials include metals, especially aluminium or steel, or naturally grown, organic materials, such as wood or other (pressed) fibrous materials. Also glassy or ceramic materials can be used. It is possible to use any combination of such materials. It is also contemplated that such materials can be filled (e.g. with fibres, minerals, clays, silicates, carbonates, combinations thereof or the like) or foamed.

The carrier element can further exhibit any shape or geometry. It can also consist of several, not directly connected parts. For example, it can be massive, hollow, or foamed, or it can exhibit a grid-like structure. The surface of the carrier element can typically be smooth, rough, or structured, according to the intended use of the baffle and/or reinforcement element.

The manufacturing process of a baffle and/or reinforcement element in accordance with the present invention depends largely on the material of the carrier element. If the material of the carrier element can be (injection-) moulded or extruded, the whole baffle and/or reinforcement element can be produced in a two-step injection-moulding process or a co-extrusion process of the carrier element and the thermally expandable composition. If using a two-step injection moulding process, in a first step, material for the carrier element is injected into the mould. After solidification, the cavity of the injection moulding tool is enlarged or adjusted, or the injection-moulded piece is transferred into another tool and the second component, in this case the material for the thermally expandable composition, is injected.

If the carrier element is not shaped by injection-moulding or extrusion, e.g., because it consist of a metal or alloy, it may be first manufactured by a suitable process and then introduced into the injection-moulding tool, and the thermally expandable composition may be injection-moulded into the tool where the carrier element was placed. Another possibility is to extrude the thermally expandable composition onto the pre-fabricated carrier element. Of course there is also the possibility of manufacturing the carrier element and the expandable composition element individually by a suitable process, and then attaching the expandable composition element to the carrier element by any suitable means, such as chemically or physically, e.g. by gluing or the like, or mechanically, e.g. by bolting, screwing, or the like.

Another aspect of the present invention is the use of the baffle and/or reinforcement element as described above to seal, baffle, or reinforce a cavity or hollow structure of a land-, water-, or air-vehicle, preferably an automotive vehicle, and/or a cavity of a building such that the transmission of noise, vibrations, humidity, and/or heat is reduced, and/or the object surrounding said cavity is mechanically strengthened.

A further aspect of the present invention is a method for sealing, baffling and/or reinforcing a cavity or hollow structure, characterised in that an element comprising a thermally expandable composition according as described above is introduced into said cavity or hollow structure and subsequently expanded by heat and/or UV treatment such that said cavity or hollow structure is at least partially filled by the expanded composition. Preferred temperature for the thermal expansion process is between 110 °C and 210 °C during between 10 and 60 min. Preferred activation time for the UV-triggered expansion process is between 5 and 15 min. Preferred temperature for the combined thermal and UV-triggered expansion process is between 80 °C and 120 °C during between 5 and 30 min.

The invention is further explained in the following experimental part which, however, shall not be construed as limiting the scope of the invention.

### Examples

### 1. Formulation of example compositions

### 1.1. Compositions

Several example inventive compositions (C-1 to C-16) were prepared according to the procedure shown below. The exact individual compositions in parts per weight ("weight parts", abbreviated "ppw") of their respective ingredients based on the total weight of the composition are shown in Tables 1 to 3. These values can easily be converted to wt-% if the sum of all weight parts of a composition is set to 100%.

| *Ingredient* (ppw) | **C-1** | **C-2** | **C-3** | **C-4** | **C-5** |
|---|---|---|---|---|---|
| *Polymer P* | 74.3 | 74.3 | 74.3 | 74.3 | 74.3 |
| *Azo Radical Initiator I1* | 2.4 | 2.4 | 4.8 | 4.8 | 4.8 |
| *Adhesion Promoter AD* | 16.9 | 16.9 | 16.9 | 16.9 | 16.9 |
| *Tackifier T* | 8.8 | 8.8 | 8.8 | 8.8 | 8.8 |
| *Antioxidant AO* | - | 0.72 | - | - | 1.44 |
| *Polyacrylate AC* | 0.79 | 0.79 | 0.79 | - | 0.79 |

| | | | | | |
|---|---|---|---|---|---|
| **Table 1:** Detailed inventive compositions C-1 to C-5 shown in parts per weight (ppw) of the individual ingredients. | | | | | |

| *Ingredient* (ppw) | **C-6** | **C-7** | **C-8** | **C-9** |
|---|---|---|---|---|
| *Polymer P* | 74.3 | 74.3 | 74.3 | 74.3 |
| *Azo Radical Initiator I2* | 3.6 | 3.6 | 7.2 | 7.2 |
| *Adhesion Promoter AD* | 16.9 | 16.9 | 16.9 | 16.9 |
| *Tackifier T* | 8.8 | 8.8 | 8.8 | 8.8 |
| *Antioxidant AO* | - | 0.72 | - | 1.44 |
| *Polyacrylate AC* | 0.79 | 0.79 | 0.79 | 0.79 |

| | | | | |
|---|---|---|---|---|
| **Table 2:** Detailed inventive compositions C-6 to C-9 shown in parts per weight (ppw) of the individual ingredients. | | | | |

| *Ingredient* (ppw) | **C-10** | **C-11** | **C-12** | **C-13** | **C-14** | **C-15** | **C-16** |
|---|---|---|---|---|---|---|---|
| *Polymer P* | 74.3 | 74.3 | 74.3 | 74.3 | 74.3 | 74.3 | 74.3 |
| *Azo Radical Initiator I3* | - | - | - | - | 4.3 | 4.3 | 8.6 |
| *Azo Radical Initiator I4* | 4.2 | 4.2 | 8.4 | 8.4 | - | - | - |
| *Adhesion Promoter AD* | 16.9 | 16.9 | 16.9 | 16.9 | 16.9 | 16.9 | 16.9 |
| *Tackifier T* | 8.8 | 8.8 | 8.8 | 8.8 | 8.8 | 8.8 | 8.8 |
| *Filler* | 2.5 | 2.5 | 2.5 | 2.5 | - | - | - |
| *Antioxidant AO* | - | 0.72 | - | 1.44 | - | 0.72 | - |
| *Polyacrylate AC* | 0.79 | 0.79 | 0.79 | 0.79 | 0.79 | 0.79 | 0.79 |

| | | | | | | | |
|---|---|---|---|---|---|---|---|
| **Table 3:** Detailed inventive compositions C-10 to C-16 shown in parts per weight (ppw) of the individual ingredients. | | | | | | | |

Details on the ingredients used in the inventive example compositions C-1 to C-16 described herein are listed in Table 4.

### 1.2. Mixing and moulding procedure

All compositions were prepared in a HAAKE™ Rheomix Lab Mixer equipped with roller rotors. After the mixer was preheated to 95°C, the polymer P, the adhesion promoter AD and the tackifier T were added and mixed over 5 min at 50 rpm. Subsequently the temperature was set to 70°C and 5 rpm after which the mixture was allowed to cool down (70-75°C for experiments involving azo radical initiator I1, 80°C for I2 and 14, and 85°C for 13). The polyacrylate AC was preheated to 60°C and dripped over the azo radical initiator. They were added to the mixture in portions over 1 min at 10 rpm followed by 1-2 min long mixing. Finally the melt was removed from the mixer and pressed into sample shapes using a hot press at 75°C for 30s.

| ***Ingredient*** | **Description** |
|---|---|
| *Polymer P* | Ethylene-butyl acrylate (EBA) with 35 wt.-% butyl acrylate monomer and a MFI of 40 g/10 min (ATSM D1238) |
| *Azo Radical Initiator I1* | Azobisisobutyronitrile (AIBN) |
| *Azo Radical Initiator I2* | 1,1'-Azobis(cyclohexanecarbonitrile) |
| *Azo Radical Initiator I3* | 2,2'-Azobis(*N*-butyl-2-methylpropionamide) |
| *Azo Radical Initiator I4* | 2,2'-Azobis[2-methyl-N-(2-hydroxyethyl)propionamide] |
| *Adhesion Promoter AD* | Ethylene-glycidyl methacrylate copolymer (8 wt.-% glycidyl methacrylate) with MFI of 5 g/10 min (ASTM D1238) |
| *Tackifier T* | Hydrocarbon resin (aromatically modified C5 hydrocarbon resin), softening point 97 °C |
| *Filler* | Talc (particle size (dso) : 11 µm) |
| *Antioxidant AO* | Pentaerythritol Tetra kis(3-(3,5-d i-*tert*-butyl-4-hydroxyphenyl)propionate) |
| *Polyacrylate AC* | Dipentaerythritol pentaacrylate |

| | |
|---|---|
| **Table 4:** Details on the ingredients used in the inventive example compositions C-1 to C-16. | |

### 2. Expansion testing of example compositions C1 - C16 by thermal activation

Expansion and expansion stability was tested in all samples by heat treatment (baking) of the individual samples at various temperatures during 30 min in an oven. The heating ramp from room temperature (23 °C) to the respective baking temperature was always 10 min. The temperatures and magnitude of expansion (in % based on the original volume prior to expansion) at the corresponding baking temperatures are shown in Tables 5 and 6.

Expansions were quantified for each sample by measuring the density before and after expansion. The densities were determined according to DIN EN ISO 1183 using the water immersion method (Archimedes principle) in deionised water and a precision balance to measure the mass.

The expansion stability can be estimated by comparing the volumetric thermal expansion (in %, based on the original volume in the non-expanded state) of a sample at different temperatures.

| ***Example*** | **C-1** | **C-2** | **C-3** | **C-4** | **C-5** | **C-6** | **C-7** | **C-8** |
|---|---|---|---|---|---|---|---|---|
| Expansion at 120 °C [%] | 372 | 318 | 654 | 580 | 641 | 262 | 262 | 615 |
| Expansion at 150 °C [%] | 365 | 336 | 485 | 419 | 549 | 294 | 294 | 642 |
| Expansion at 180 °C [%] | 248 | 223 | 377 | 203 | 575 | 234 | 185 | 410 |
| Expansion at 200 °C [%] | 204 | 256 | 286 | 278 | 511 | 206 | 164 | 229 |

| | | | | | | | | |
|---|---|---|---|---|---|---|---|---|
| **Table 5:** Volumetric thermal expansion (in %) of the inventive composition C-1 to C-8 samples at different temperatures. All samples were measured after 30 min baking at the indicated temperature. Heating ramp was in all samples 10 min. | | | | | | | | |

| ***Example*** | **C-9** | **C-10** | **C-11** | **C-12** | **C-13** | **C-14** | **C-15** | **C-16** |
|---|---|---|---|---|---|---|---|---|
| Expansion at 120 °C [%] | 520 | n/m | n/m | n/m | n/m | n/m | n/m | n/m |
| Expansion at 150 °C [%] | 662 | 290 | 380 | 716 | 683 | 240 | 214 | 389 |
| Expansion at 180 °C [%] | 520 | 332 | 382 | 663 | 612 | 259 | 332 | 350 |
| Expansion at 200 °C [%] | 429 | 286 | 373 | 497 | 713 | 217 | 303 | 242 |

| | | | | | | | | |
|---|---|---|---|---|---|---|---|---|
| **Table 6:** Volumetric thermal expansion (in %) of the inventive composition C-9 to C-16 samples at different temperatures. All samples were measured after 30 min baking at the indicated temperature. Heating ramp was in all samples 10 min. "n/m" means that this experimental value has not been measured. | | | | | | | | |

The Results in Tables 5 and 6 show that the inventive thermally expandable compositions show in many embodiments a very good expansion capability of several 100 percent over a very broad temperature range of between 120 °C and 200 °C. Thus, they are suitable for low temperature expansions as well as for high temperature expansions. The use of a suitable antioxidant does not hamper the expansions at low temperatures, but at the same time increases the expansion stability at higher temperatures. In very preferred embodiments, expansions of over 500 % over the whole temperature range (120°C-200°C) are possible, without the use of traditional blowing agents such as azodicarbonamide.

### 3. Expansion testing of example composition C-8 by UV activation

The inventive composition C-8 (see Table 2) was used to test expansion triggered by UV irradiation. For this, a series of test samples were prepared with different sample thickness ranging from 2 to 4 mm. In order to monitor the core temperature of the samples, each sample for UV activation contained a thermocouple wire. The thus prepared samples were fixed in the air with a distance of 25 cm from the UV source in order to minimize heating from the surrounding surfaces and the heat generated by the UV lamp. For UV activation, a Hönle UVASPOT 400 W lamp (Hönle UV Technology, Germany) equipped with an F-emitter (300-400 nm) was used.

The test conditions and parameters, as well as the volumetric expansion values for each sample are shown in Table 7. For comparison, 4 samples of the same composition an 4 mm sample thickness with only thermal activation are included in the table as well. The samples are numbered C-8a to C8e.

| ***Example*** | **C-8a** | **C-8b** | **C-8c** | **C-8d** | **C-8e** |
|---|---|---|---|---|---|
| Sample thickness [mm] | 4 | 2 | 4 | 4 | 4 |
| Type of activation [°C] or UV | UV | UV | 80 | 100 | 100 |
| Core temperature (UV) [°C] | 80 | 100 | n/m | n/m | n/m |
| Activation time [min] | 5 | 5 | 30 | 15 | 20 |
| Volumetric expansion [%] | 110 | 210 | 15 | 25 | 49 |

| | | | | | |
|---|---|---|---|---|---|
| **Table 7:** Volumetric thermal expansion (in %) of the inventive composition C-8a to C-8e samples expanded by UV irradiation or thermal activation. | | | | | |

It is apparent from the data in Table 7 that the inventive compositions can be activated (and thus foamed) by UV irradiation, and not only heat. With small sample thickness (e.g., 2mm), a useful expansion can be achieved after only 5 min (C-8b). The UV lamp does generate heat which leads to a significant core temperature increase. However, the experiments show that the foaming process is clearly UV-triggered, and the contribution of the temperature is marginal. Purely heat-triggered experiments (C-8c, C-8d) with a temperature corresponding to the core temperatures of the UV experiments (C-8a, C8-b) exhibit only very small expansion volumes, even after much longer activation time. This shows that very short activation times are possible for expansion when UV activation is used, but preferably for applications where a small layer thickness of the expandable composition is sufficient and/or for thermally sensitive applications. For applications where high expansion volumes and/or larger layer thickness is more important than activation time, however, thermal activation is preferable.

Of course the present invention is not limited to the examples described herein, which only illustrate the general principle of the present invention, or selected embodiments. A person of ordinary skill in the art would realise, however, that certain modifications would come within the teachings of the present invention. Therefore, the following claims should be studied to determine the true scope and content of the invention.

## Claims

1. Baffle and/or reinforcement element for hollow structures, wherein said element comprises or essentially consists of a thermally expandable composition, comprising
a) between 20 and 85 wt.-% of least one thermoplastic polymer **P,** cross-linkable by radical reaction;
b) between 2 and 15 wt.-% of at least one azo radical initiator **I;**
c) between 0 and 25 wt.-% of at least one adhesion promoter **AD;**
d) between 0 and 10 wt.-% of at least one tackifier **T;**
e) between 0 and 2.5 wt.-% of at least one antioxidant **AO;**
f) between 0 and 2.5 wt.-% of at least one polyacrylate **AC,** having a molecular weight of less than 2'500 g/mol;
wherein all individual amounts are based on the total composition before expansion, and
wherein said composition is free of peroxides, bicarbonates, azodicarbonamide, or 4,4'-oxybis(benzenesulfonyl hydrazide), and wherein said azo radical initiator **I** is selected from the group consisting of azobisisobutyronitrile, 1,1'-azobis(cyclohexane-1-carbonitrile), and 2,2'-azobis[2-methyl-N-(2-hydroxyethyl)propionamide].

2. Baffle and/or reinforcement element according to claim 1, wherein said tackifier **T** comprises a C5 hydrocarbon resin which is optionally aromatically modified.

3. Baffle and/or reinforcement element according to any one of claims 1 or 2, wherein said antioxidant **AO** comprises a sterically hindered phenol compound with a melting point of at least 110 °C.

4. Baffle and/or reinforcement element according to any one of claims 1 to 3, wherein said polyacrylate **AC** has an acrylate functionality of at least 4.

5. Baffle and/or reinforcement element according to any one of claims 1 to 4, wherein said thermally expandable composition comprises
between 60 and 75 wt.-% of said thermoplastic polymer **P;**
between 2.5 and 10 wt.-% said azo radical initiator **I;**
between 10 and 20 wt.-% of said adhesion promoter **AD;**
between 5 and 8 wt.-% of said tackifier **T;**
between 0.5 and 1.5 wt.-% of said antioxidant **AO;**
between 0.5 and 1.5 wt.-% of said polyacrylate **AC;** selected such that the sum of all individual wt.-% values does not exceed 100 wt.-%.

6. Baffle and/or reinforcement element according to any one of claims 1 to 5, wherein that said element comprises a carrier on which the thermally expandable composition is deposited or attached, wherein said carrier is made of a thermoplastic material.

7. A process for manufacturing a baffle and/or reinforcement element according to claim 6, wherein the thermally expandable composition is injection-moulded onto the carrier or co-extruded with the carrier.

8. A process for foaming a thermally expandable composition as defined in any one of claims 1-5, wherein said thermally expandable composition is subjected to a temperature of between 120 and 200 °C for between 10 and 60 min and/or to UV irradiation with a UV intensity on the composition surface of at least 2.5 mW/cm⁻² for between 1 and 60 min.

9. Use of the baffle and/or reinforcement element of any one of claims 1 to 6 to seal, baffle, or reinforce a cavity or hollow structure of a land-, water-, or air-vehicle, preferably an automotive vehicle, and/or a cavity of a building such that the transmission of noise, vibrations, humidity, and/or heat is reduced, and/or the object surrounding said cavity is mechanically strengthened.

10. Method for sealing, baffling and/or reinforcing a cavity or hollow structure, wherein an element comprising a thermally expandable composition as defined in any of claims 1 to 5 is introduced into said cavity or hollow structure and subsequently expanded by heat and/or UV treatment such that said cavity or hollow structure is at least partially filled by the expanded composition.

## Patentansprüche

1. Dämpfungs- und/oder Verstärkungselement für Hohlstrukturen, wobei das Element eine thermisch expandierbare Zusammensetzung umfasst oder im Wesentlichen daraus besteht, umfassend:
a) zwischen 20 und 85 Gew.-% mindestens eines durch eine radikalische Reaktion vernetzbaren thermoplastischen Polymers **P;**
b) zwischen 2 und 15 Gew.-% mindestens eines Azo-Radikalstarters **I;**
c) zwischen 0 und 25 Gew.-% mindestens eines Haftvermittlers **AD;**
d) zwischen 0 und 10 Gew.-% mindestens eines Klebrigmachers **T;**
e) zwischen 0 und 2,5 Gew.-% mindestens eines Antioxidans **AO;**
f) zwischen 0 und 2,5 Gew.-% mindestens eines Polyacrylats **AC** mit einem Molekulargewicht von weniger als 2.500 g/mol;
wobei alle einzelnen Mengen sich auf die Gesamtzusammensetzung vor der Expansion beziehen und wobei die Zusammensetzung frei von Peroxiden, Hydrogencarbonaten, Azodicarbonamid oder 4,4'-Oxybis(benzolsulfonylhydrazid) ist und wobei der Azo-Radikalstarter **I** aus der Gruppe bestehend aus Azobisisobutyronitril, 1,1'-Azobis(cyclohexan-1-carbonitril) und 2,2'-Azobis[2-methyl-N-(2-hydroxyethyl)propionamid] ausgewählt ist.

2. Dämpfungs- und/oder Verstärkungselement nach Anspruch 1, wobei der Klebrigmacher **T** ein C5-Kohlenwasserstoffharz umfasst, das gegebenenfalls aromatisch modifiziert ist.

3. Dämpfungs- und/oder Verstärkungselement nach einem der Ansprüche 1 oder 2, wobei das Antioxidans **AO** eine sterisch gehinderte Phenolverbindung mit einem Schmelzpunkt von mindestens 110 °C umfasst.

4. Dämpfungs- und/oder Verstärkungselement nach einem der Ansprüche 1 bis 3, wobei das Polyacrylat **AC** eine Acrylatfunktionalität von mindestens 4 aufweist.

5. Dämpfungs- und/oder Verstärkungselement nach einem der Ansprüche 1 bis 4, wobei die thermisch expandierbare Zusammensetzung Folgendes umfasst:
zwischen 60 und 75 Gew.-% des thermoplastischen Polymers **P;**
zwischen 2,5 und 10 Gew.-% des Azo-Radikalstarters **I;**
zwischen 10 und 20 Gew.-% des Haftvermittlers **AD;**
zwischen 5 und 8 Gew.-% des Klebrigmachers **T;**
zwischen 0,5 und 1,5 Gew.-% des Antioxidans **AO;**
zwischen 0,5 und 1,5 Gew.-% des Polyacrylats **AC;** derart ausgewählt, dass die Summe aller einzelnen Gew.-%-Angaben 100 Gew.-% nicht übersteigt.

6. Dämpfungs- und/oder Verstärkungselement nach einem der Ansprüche 1 bis 5, wobei das Element einen Träger, auf dem die thermisch expandierbare Zusammensetzung abgeschieden oder angebracht ist, umfasst, wobei der Träger aus einem thermoplastischen Material hergestellt ist.

7. Verfahren zur Herstellung eines Dämpfungs- und/oder Verstärkungselements nach Anspruch 6, wobei die thermisch expandierbare Zusammensetzung auf den Träger spritzgegossen wird oder mit dem Träger coextrudiert wird.

8. Verfahren zur Verschäumung einer thermisch expandierbaren Zusammensetzung gemäß einem der Ansprüche 1-5, wobei die thermisch expandierbare Zusammensetzung für zwischen 10 und 60 Minuten einer Temperatur zwischen 120 und 200 °C und/oder für zwischen 1 und 60 Minuten einer UV-Bestrahlung mit einer auf der Oberfläche der Zusammensetzung mindestens 2,5 mW/cm⁻² betragenden UV-Intensität unterworfen wird.

9. Verwendung des Dämpfungs- und/oder Verstärkungselements nach einem der Ansprüche 1 bis 6 zum Abdichten, Dämpfen oder Verstärken eines Hohlraums oder einer Hohlstruktur eines Land-, Wasser- oder Luftfahrzeugs, vorzugsweise eines Kraftfahrzeugs und/oder eines Hohlraums eines Gebäudes derart, dass die Übertragung von Lärm, Vibrationen, Feuchtigkeit und/oder Wärme verringert wird, und/oder dass das den Hohlraum umgebende Objekt mechanisch verstärkt wird.

10. Verfahren zum Abdichten, Dämpfen und/oder Verstärken eines Hohlraums oder einer Hohlstruktur, wobei das eine thermisch expandierbare Zusammensetzung gemäß einem der Ansprüche 1 bis 5 umfassende Element in den Hohlraum oder die Hohlstruktur eingebracht wird und sich anschließend durch Wärme- und/oder UV-Behandlung derart ausdehnt, dass der Hohlraum oder die Hohlstruktur zumindest teilweise durch die expandierte Zusammensetzung gefüllt sind.

## Revendications

1. Déflecteur et/ou élément de renforcement pour structures creuses, ledit élément comprenant ou consistant essentiellement en une composition thermiquement expansible, comprenant
a) entre 20 et 85 % en poids d'au moins un polymère thermoplastique **P,** réticulable par réaction radicalaire ;
b) entre 2 et 15 % en poids d'au moins un initiateur radicalaire azoïque **I** ;
c) entre 0 et 25 % en poids d'au moins un promoteur d'adhérence **AD** ;
d) entre 0 et 10 % en poids d'au moins un agent poisseux **T** ;
e) entre 0 et 2,5 % en poids d'au moins un antioxydant **AO** ;
f) entre 0 et 2,5 % en poids d'au moins un polyacrylate **AC,** ayant un poids moléculaire de moins de 2500 g/mol ;
toutes les quantités individuelles étant basées sur la composition totale avant expansion, et
ladite composition étant dépourvue de peroxydes, bicarbonates, azodicarbonamide ou 4,4'-oxybis(benzène-sulfonylhydrazide), et
ledit initiateur radicalaire azoïque **I** étant choisi dans le groupe constitué par l'azobisisobutyronitrile, le 1,1'-azobis(cyclohexane-1-carbonitrile), et le 2,2'-azobis[2-méthyl-N-(2-hydroxyéthyl)propionamide] .

2. Déflecteur et/ou élément de renforcement selon la revendication 1, dans lesquels ledit agent poisseux **T** comprend une résine d'hydrocarbure en C5 qui est éventuellement modifiée aromatiquement.

3. Déflecteur et/ou élément de renforcement selon l'une quelconque des revendications 1 et 2, dans lesquels ledit antioxydant **AO** comprend un composé phénolique stériquement encombré avec un point de fusion d'au moins 110 °C.

4. Déflecteur et/ou élément de renforcement selon l'une quelconque des revendications 1 à 3, dans lesquels ledit polyacrylate **AC** possède une fonctionnalité acrylate d'au moins 4.

5. Déflecteur et/ou élément de renforcement selon l'une quelconque des revendications 1 à 4, dans lesquels ladite composition thermiquement expansible comprend
entre 60 et 75 % en poids dudit polymère thermoplastique **P** ;
entre 2,5 et 10 % en poids dudit initiateur radicalaire azoïque **I** ;
entre 10 et 20 % en poids dudit promoteur d'adhérence **AD** ;
entre 5 et 8 % en poids dudit agent poisseux **T** ;
entre 0,5 et 1,5 % en poids dudit antioxydant **AO** ;
entre 0,5 et 1,5 % en poids dudit polyacrylate **AC** ; choisis de telle sorte que la somme de toutes les valeurs individuelles de pourcentage pondéral ne dépasse pas 100 % en poids.

6. Déflecteur et/ou élément de renforcement selon l'une quelconque des revendications 1 à 5, ledit élément comprenant un support sur lequel la composition thermiquement expansible est déposée ou attachée, ledit support étant constitué d'un matériau thermoplastique.

7. Procédé de fabrication d'un déflecteur et/ou d'un élément de renforcement selon la revendication 6, dans lequel la composition thermiquement expansible est moulée par injection sur le support ou coextrudée avec le support.

8. Procédé de gonflement d'une composition thermiquement expansible telle que définie dans l'une quelconque des revendications 1 à 5, dans lequel ladite composition thermiquement expansible est soumise à une température comprise entre 120 et 200 °C pendant 10 à 60 min et/ou à un rayonnement UV avec une intensité UV sur la surface de la composition d'au moins 2,5 mW/cm² pendant 1 à 60 min.

9. Utilisation du déflecteur et/ou de l'élément de renforcement de l'une quelconque des revendications 1 à 6 pour sceller, dérouter ou renforcer une cavité ou structure creuse d'un véhicule terrestre, maritime ou aérien, de préférence un véhicule automobile, et/ou une cavité d'un bâtiment de telle sorte que la transmission du bruit, des vibrations, de l'humidité et/ou de la chaleur soit réduite, et/ou l'objet entourant ladite cavité soit renforcé mécaniquement.

10. Procédé de scellement, déroutement et/ou renforcement d'une cavité ou structure creuse, dans lequel un élément comprenant une composition thermiquement expansible telle que définie dans l'une quelconque des revendications 1 à 5 est introduit dans ladite cavité ou structure creuse et ensuite expansé par de la chaleur et/ou un traitement UV de telle sorte que ladite cavité ou structure creuse soit au moins partiellement remplie par la composition expansée.
